# EUROPÄISCHE PATENTSCHRIFT

(11) **EP 0 694 779 B1**
(45) Veröffentlichungstag und Bekanntmachung des Hinweises auf die Patenterteilung: **30.07.1997**
(21) Anmeldenummer: 95106682.8
(22) Anmeldetag: 04.05.1995
(51) Int. Cl.: G01N 13/02, B01L 3/04

(54) **Vorrichtung zur Messung der Oberflächenspannung**
Device for measuring surface tension
Dispositif pour la détermination de la tension de surface

(30) Priorität: 08.07.1994 DE 4423720
(43) Veröffentlichungstag der Anmeldung: 31.01.1996
(73) Patentinhaber: Heraeus Electro-Nite International N.V., B-3530 Houthalen (BE)
(72) Erfinder: Gerits, Erik Jan Mathijs, B-3600 Genk (BE); Van der Perre, B-2930 Brasschaat (BE)
(74) Vertreter: Kühn, Hans-Christian

(56) Entgegenhaltungen:
- DE-A- 2 635 373
- DE-A- 2 915 956
- DE-C- 4 228 942
- FR-A- 1 341 670
- FR-A- 2 393 610
- US-A- 3 780 568
- US-A- 4 527 421
- METALLURGICAL TRANSACTIONS B PROCESS METALLURGY., Bd. 8b, Juni 1977 NEW YORK US, Seiten 301-303, W.L. FALKE ET AL. 'Surface tension of Zinc: the positive temperature coefficient'
- METALLURGICAL TRANSACTIONS B PROCESS METALLURGY., Bd. 9b, März 1978 NEW YORK US, Seiten 101-110, G.A. IRONS ET AL. 'Bubble formation at nozzles in pig iron'

## Beschreibung

Die Erfindung betrifft eine Vorrichtung zur Messung der Oberflächenspannung von Flüssigkeiten mit einer Kapillare zur Gaszufuhr, die ein Kontaktstück und eine Düse aufweist, wobei die Kapillare mindestens teilweise in einem Tiegel zur Aufnahme der Flüssigkeit angeordnet ist und wobei das Kontaktstück außerhalb des Innenraumes des Tiegels angeordnet ist. Die Erfindung betrifft auch eine Meßeinrichtung mit einer derartigen Vorrichtung.

Eine derartige Vorrichtung ist aus DE 22 31 598/A1 bekannt, in der eine Vorrichtung sowie ein Verfahren zur Bestimmung von Oberflächenspannungen an Grenzflächen zwischen Flüssigkeiten und Gasen beschrieben ist. Die Vorrichtung benutzt eine Kapillare zur Gaszufuhr mit einem Kontaktstück und einer Düse. Die Kapillare ragt von oben in den die Flüssigkeit aufnehmenden Behälter hinein. Bei der Messung in Metallschmelzen ist die Kapillare der aus der zu messenden Flüssigkeit aufsteigenden Wärme ausgesetzt. Die Kapillare ist außerhalb des Tiegels gehaltert. Eine derartige Anordnung ist recht aufwendig.

Eine weitere Vorrichtung ist aus der DE 29 15 956/A1 bekannt, in der eine Vorrichtung zur Messung der Oberflächenspannung elektrisch leitender Flüssigkeiten beschrieben ist. Diese Vorrichtung weist eine Kapillare auf mit einem Anschlußstutzen und einer Düse. Das die Düse tragende Ende der Kapillare ist u-förmig gebogen. Die Kapillare wird von oben in eine Flüssigkeit eingetaucht, so daß die Düse nach oben zeigt. Beim Betrieb der Vorrichtung treten aus der Düse Gasblasen aus und steigen senkrecht in einem Meßrohr auf. An dem Meßrohr sind zwei mit Spannung beaufschlagte Elektroden angeordnet, die mit einer Zeitmeßeinrichtung verbunden sind. Beim Durchgang der Gasblasen zwischen den Elektroden wird eine Unterbrechung des zwischen den Elektroden fließenden Stromes hervorgerufen; die Frequenz der Unterbrechung des Stromkreises durch die Gasblase wird gemessen. In die Kapillare wird ein Gasstrom mit konstantem Druck eingeleitet, so daß mit Hilfe der Frequenz der Gasblasen die Oberflächenspannung der Flüssigkeit bestimmt werden kann. Derartige Vorrichtungen sind relativ aufwendig, da die von oben in die Flüssigkeit getauchte Kapillare ebenso wie das die Kontakte aufweisende Meßrohr zusätzlich gehaltert werden muß. Dabei müssen diese Elemente gleichzeitig gegen die beispielsweise aus schmelzflüssigen Metallen aufsteigende Wärme geschützt werden. Auch die Notwendigkeit, einen Stromfluß innerhalb der Fllüssigkeit zu erzeugen, bedingt einen relativ hohen operativen und sicherheitstechnischen Aufwand. Auf die Gefahr möglicher Kriechströme, wenn die Gasblasen die Kontakte nicht einwandfrei voneinander isolieren, ist als problematisch anzusehen, da durch derartige Kriechströme die Meßergebnisse verfälscht werden können.

Weiterhin ist aus DE 42 28 942/C1 eine Vorrichtung zur Messung von Oberflächenspannungen in Flüssigkeiten bekannt, bei der eine Kapillare teilweise in dem Tiegel zur Aufnahme der Flüssigkeit angeordnet ist, wobei sie durch die Tiegelwandung hindurchgeführt wird. Der Kapillare entströmt das in die Flüssigkeit zu leitende Gas über eine Gasverteilereinheit. Das Gas strömt über die gesamte Oberfläche der Gasverteilereinheit mehr oder weniger regellos aus und gelangt dadurch unter sich ständig ändernden Bedingungen an die Oberfläche der Flüssigkeit, wo ein Abtastorgan einen Teil der Gasblasen (in der Regel die größten) erfaßt und diese als Meßimpulse einer Auswertung zuführt. Bedingt durch unterschiedliche Austrittsöffnungen, unterschiedlich lange Wege der Gasblasen in der Flüssigkeit und durch die Verteilereinheit hervorgerufene unterschiedliche Größe der Gasblasen sowie durch die Ungenauigkeit der Justage des über der Flüssigkeit angeordneten Abtastorgans ist eine genaue Messung der Oberflächenspannung mit der beschrieben Vorrichtung nicht möglich, da eine derartige Vorrichtung die an unterschiedlicher Stelle und in unterschiedlicher Größe aus der Flüssigkeit austretenden Gasblasen regelmäßig nicht vollständig und korrekt erfassen wird.

Eine weitere Vorrichtung zur Messung von Oberflächenspannungen wird in der EP 0 149 500 beschrieben. Auch in Met. Trans. B, Volume 9 B, März 1978, S. 101 - 110, wird die Bestimmung der Frequenz von Gasblasen, hier in flüssigem Roheisen, beschrieben. Hier wird eine Vorrichtung gezeigt, in der die Gasblasen mittels eines Mikrofons nachgewiesen werden.

Derartige Vorrichtungen werden beispielsweise verwendet, um mit Hilfe der Oberflächenspannung von Metallschmelzen deren Eigenschaften zu bestimmen. Unter anderem ist es möglich, bei Kenntnis der Oberflächenspannung von Gußeisen auf die Graphitmorphologie des im Gußeisen enthaltenen Kohlenstoffs zu schließen, da die Oberflächenspannung bzw. die Grenzflächenenergie zwischen verschiedenen Phasen die Mikrostruktur einer Legierung beeinflußt. Dieser Effekt ist in dem Artikel "Surface energies of liquid cast irons containing magnesium and cerium" von E. Selcuk und D. H. Kirkwood in Journal of the Iron and Steel Institute, Februar 1973, S. 134 - 140, beschrieben. Beimengungen von Cer und Magnesium zu Gußeisen beschleunigen die Bildung von sphärolitischem Graphit, das heißt, mit wachsendem Gehalt an Cer oder Magnesium ändert sich der Habitus der Graphitkristalle von der anfänglich lamellaren bis zur sphärolitischen Graphitart (Kugelgraphit), die in der Gießereipraxis angestrebt wird, weil eine derartige Graphitmorphologie in dem Gußeisen optimale Festigkeitseigenschaften erzeugt.

Aufgabe der vorliegenden Erfindung ist es, ausgehend von dem eingangs genannten Stand der Technik eine Vorrichtung zu schaffen, die einfach herzustellen und zu handhaben sowie in verschiedenen Flüssigkeiten zuverlässig einsetzbar ist.

Diese Aufgabe wird für eine Vorrichtung der eingangs genannten Art dadurch gelöst, daß die Kapillare durch die Wandung des Tiegels geführt und an der Wandung des Tiegels gehaltert ist und daß das Kontaktstück am oder im Boden des Tiegels gehaltert und als Tiegelhalterung ausgebildet ist. Eine derartige Vorrichtung ist relativ einfach zu fertigen und gewährleistet eine sichere Anordnung der Kapillare innerhalb der in den Tiegel einzufüllenden Flüssigkeit, ohne daß die aus einer evtl. sehr heißen Flüssigkeit, wie z. B. Metallschmelze, aufsteigende Hitze Halterung oder Meßeinrichtung schädigen können, da oberhalb der Flüssigkeit keine empfindlichen Teile angeordnet werden müssen. Eine derartige Vorrichtung ist geeignet zur Messung von Oberflächenspannungen unterschiedlicher Flüssigkeiten, auch zur Messung in flüssigem Gußeisen, um unter anderem die Graphitmorphologie zur bestimmen, zur Bestimmung des Schwefelgehaltes von Roheisen oder um die Veredelungsbehandlung von Aluminiumsilicium-Legierungen zu beurteilen.

Vorteilhaft ist es, daß die Kapillare durch die Wandung des Tiegels, insbesondere durch den Boden des Tiegels geführt ist, um eine sichere Halterung zu gewährleisten. Bei einer Anordnung im Boden kann die Kapillare senkrecht ausgerichtet sein, so daß die Gasblasen ungehindert und der Auftriebskraft folgend aus der Kapillare austreten können. Dazu ist es vorteilhaft, daß das Kontaktstück am oder im Boden des Tiegels gehaltert und als Tiegelhalterung ausgebildet ist, da der Tiegel dann mit dem Kontaktstück direkt auf den Gasanschlußstutzen einer Gaszuleitung aufgesteckt werden kann und nicht mit zusätzlichen Mitteln befestigt zu werden braucht.

Vorteilhaft für eine gleichmäßige Blasenbildung ist es, daß der innere Durchmesser der Kapillare an der Düse erweitert, insbesondere kreisförmig erweitert ist oder daß die Düse schlitzförmig erweitert ist. Dabei ist es zweckmäßig, daß die Differenz zwischen innerem und äußerem Durchmesser der Kapillare an dem äußeren Ende der Düse nicht größer ist als 1 mm, insbesondere als 0,5 mm, und/oder daß das Produkt aus thermischer Leitfähigkeit und Wandstärke der Kapillare am äußeren Ende der Düse kleiner ist als 5,5 x 10⁻³ W/K bei 1400° C. Eine derartige Anordnung gewährleistet eine regelmäßige Bildung von Blasen, die stets einen praktisch gleichen Durchmesser aufweisen. Es ist auch möglich, daß die Düse seitlich an der Kapillare angeordnet ist, beispielsweise durch eine seitliche Bohrung oder einen seitlich in die Kapillare eingebrachten (z. B. gesägten oder gefrästen) Schlitz.

Vorteilhaft ist es insbesondere für die Messung in agressiven oder sehr heißen Medien, daß die Kapillare aus einem gasdichten Material, wie Aluminiumoxid, Quarz oder Zirkonoxid gebildet ist, da diese Materialien eine hohe Temperaturbeständigkeit aufweisen und in vielen Medien, wie Gußeisenschmelzen chemisch resistent sind.

Für die Genauigkeit und Reproduzierbarkeit der Meßergebnisse ist es zweckmäßig, daß das Kontaktstück gasdicht mit dem Tiegel verbunden ist.

Die Aufgabe wird für eine Meßeinrichtung mit einer Gasleitung und der eingangs charakterisierten erfindungsgemäßen Vorrichtung dadurch gelöst, daß das Kontaktstück mit einem Gasanschlußstutzen einer Gasleitung und mit einem Drucksensor und/oder einem Durchflußmesser gasdicht verbunden ist, da mit Hilfe dieser Meßeinrichtungen die Frequenz der austretenden Gasblasen bestimmt werden kann.

Nachfolgend wird die Erfindung anhand eines Ausführungsbeispieles mittels einer Zeichnung näher erläutert. In der Zeichnung zeigt
- Figur 1: die schematische Darstellung einer erfindungsgemäßen Vorrichtung mit Anordnung der Kapillare im Boden des Tiegels
- Figur 2: mehrere Düsenformen der Kapillare
- Figur 3: eine schematische Darstellung einer Meßeinrichtung
- Figur 4: eine Druckmeßkurve zur Bestimmung der Blasenfrequenz.

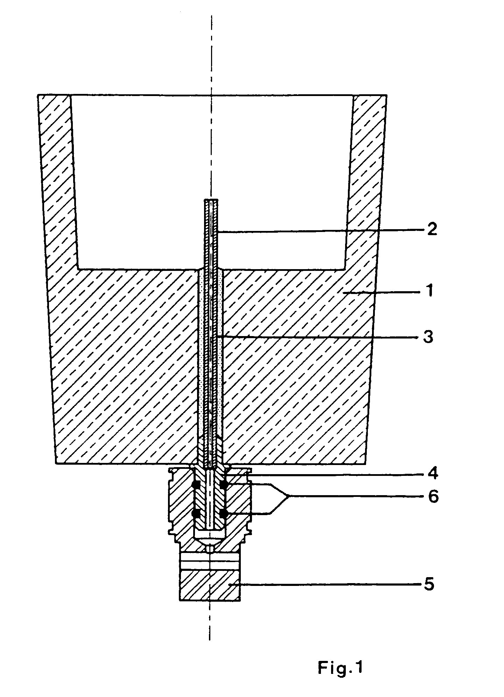

Der in Figur 1 dargestellte Tiegel 1 dient der Messung der Oberflächenspannung von Gußeisenschmelzen. Er ist jedoch auch geeignet zur Messung beispielsweise in Aluminium-Silicium-Legierungen oder Roheisen. Der Tiegel besteht aus einem hitzebeständigen Material, im vorliegenden Fall aus kunstharzgebundenem Sand oder aus keramischen Fasern. Der Boden des Tiegels 1 ist stärker ausgebildet als die Seitenwände, um die notwendige Stabilität des Tiegels zu gewährleisten. Durch den Boden hindurch wird die Kapillare 2 geführt, die dort mittels eines feuerfesten Zementes 3 derart befestigt ist, daß ein Auslaufen der Schmelze durch den Tiegelboden verhindert wird. Die Kapillare 2 ist an ein Kontaktstück 4 geklebt, an dem ein Gasanschlußstutzen 5 angeordnet ist. Kontaktstück 4 und Gasanschlußstutzen 5 dienen der Gaszufuhr in die Kapillare 2. Die für reproduzierbare Messungen notwendig Gasdichtheit wird durch zwei O-Ringe 6 gewährleistet, die zwischen Kontaktstück 4 und Gasanschlußstutzen 5 angeordnet sind. Der Tiegel 1 wird über den Gasanschlußstutzen 5 mit der Gaszuleitung und der Meßeinrichtung verbunden. Kontaktstück 4 und Gasanschlußstutzen 5 sind aus Metall gebildet, die Kapillare 2 besteht aus einem feuerfesten Material, beispielsweise aus Aluminiumoxid, Zirkonoxid oder Quarz. Sie weist einen Innendurchmesser von etwa 0,7 - 1,5 mm auf und ragt in den die Schmelze aufnehmenden Hohlraum des Tiegels 1 in einer Länge von etwa 5 - 25 mm hinein. Der Hohlraum des Tiegels 1 faßt ein Schmelzenvolumen von etwa 100 ml; kleinere Volumen können dazu führen, daß die an der Tiegelwand beginnende Abkühlung der Schmelze nach dem Eingießen in den Tiegel 1 zu schnell fortschreitet, um einen genaue Messung der Oberflächenspannung der Schmelze zu ermöglichen, da ein zu kleines Volumen eine entsprechend geringe Wärmekapazität aufweist und deshalb entsprechend schnell abkühlt. Um den Einfluß dieses Abkühlungseffektes auf die Messung zu minimieren, ist die Kapillare 2 etwa in der Achse des rotationssymmetrischen Tiegels 1 angeordnet und die Düse 7 befindet sich etwa in der Mitte des Hohlraumes des Tiegels 1.

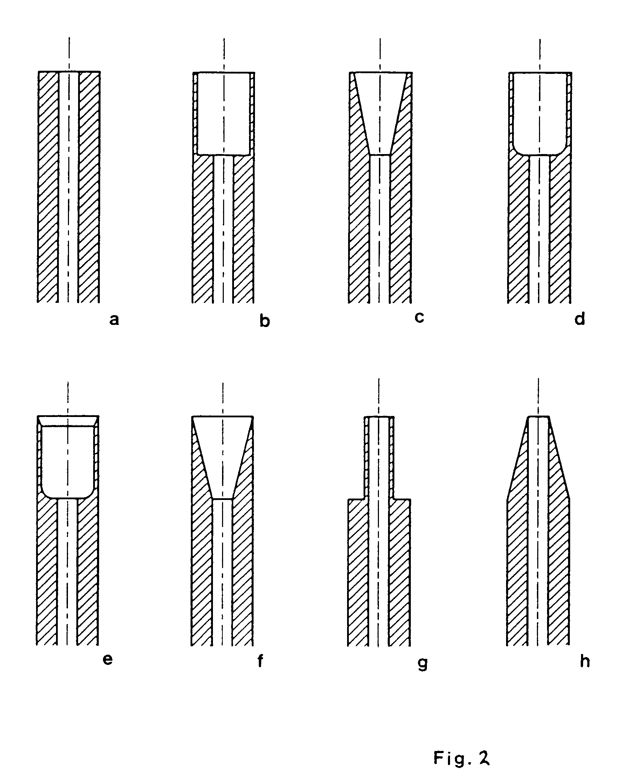

Figur 2 zeigt verschiedene Düsenformen der Kapillare 2, wie sie in der eingangs beschriebenen Vorrichtung verwendet werden können. Gemeinsam ist diesen Düsenformen, daß sie in der Vorrichtung derart dimensioniert sind, daß die Differenz zwischen Außendurchmesser und Innendurchmesser der Kapillare an dem äußeren Ende der Düse höchstens 0,5 mm beträgt, damit die Ausbildung von Gasblasen gleicher Größe gewährleistet wird. Dabei ist es denkbar, den Innendurchmesser der Kapillare über die gesamte Kapillare konstant zu halten und den Außendurchmesser an dem äußeren Ende der Düse entsprechend zu dimensionieren, wie dies in Figur 2a, g und h gezeigt ist. Es ist jedoch auch denkbar, den Innendurchmesser der Kapillare an der Düse entsprechend zu erweitern. Dabei kann diese Erweiterung in Form einer zylindrischen Durchmesservergrößerung erfolgen, wie in Figur 2b und d dargestellt oder als kegelförmige Erweiterung in Richtung des äußeren Endes der Düse, wie in Figur 2c und f gezeigt. Eine Kombination der beiden letztgenannten Düsenformen ist in Figur 2e gezeigt; hier ist der innere Durchmesser der Kapillare zylinderförmig erweitert, lediglich an dem äußeren Ende der Düse schließt sich eine weitere, kegelförmige Erweiterung an.

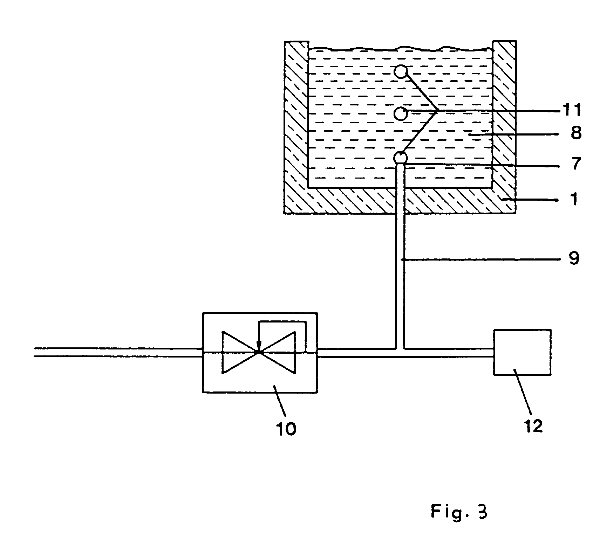

Eine Meßeinrichtung zur Bestimmung der Oberflächenspannung ist in Figur 3 schematisch dargestellt. Der eine Gußeisenschmelze 8 enthaltende Tiegel 1 ist an eine Gasleitung 9 angeschlossen, durch die das Meßgas der Gußeisenschmelze 8 zugeführt wird. Der erforderliche Gasfluß wird durch eine in der Gasleitung 9 angeordnete Gasstromregeleinrichtung 10 gesteuert. Als Meßgas findet ein für die Schmelze inertes Gas, wie beispielsweise Argon oder Stickstoff, Verwendung, das mit etwa 2 - 15 ml pro Minute in die Gußeisenschmelze 8 eingeblasen wird. Die Gasblasen 11 werden im Gußeisen an der Düse 7 geformt. Dabei baut sich in der Gasleitung 9 ein Druck auf, der nach Ablösen der Gasblasen 11 von der Düse 7 sprunghaft abnimmt und sich während der Bildung einer neuen Gasblase 11 bis zur Ablösung dieser Gasblase 11 erhöht.

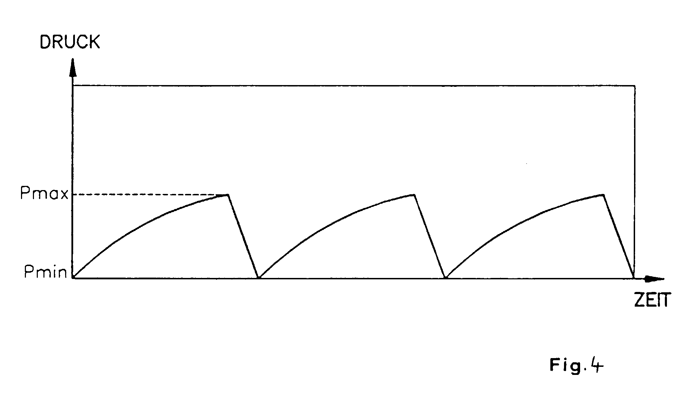

Dieser in Figur 4 dargestellte Druckverlauf als Funktion der Zeit wird von einem Drucksensor 12 erfaßt und registriert. Die Frequenz dieser durch die Bildung der Gasblasen 11 bedingten Druckschwankung dient der Berechnung der Oberflächenspannung der Gußeisenschmelze 8 oder einer mit der Oberflächenspannung in direkter Beziehung stehenden physikalischen Größe, so daß, wie eingangs beschrieben, die Graphitmorphologie in der Gußeisenschmelze 8 bestimmt werden kann. Dabei ist die Meßzeit, die zur Verfügung steht, um die Druck-Zeit-Funktion zu erfassen, durch die Erstarrung des Gußeisens in Tiegel 1 begrenzt. Die verfügbare Meßzeit wird dabei unter anderem bestimmt durch die Differenz zwischen Eingießtemperatur der Gußeisenschmelze 8 in den Tiegel 1 und der Liquidus-Temperatur des Gußeisens. Um die Temperatur zu überwachen, kann ein Temperatursensor, beispielsweise ein Thermoelement, im Hohlraum des Tiegels 1 angeordnet sein.

## Patentansprüche

1. Vorrichtung zur Messung der Oberflächenspannung von Flüssigkeiten mit einer Kapillare zur Gaszufuhr, die ein Kontaktstück und eine Düse aufweist, wobei die Kapillare (2) mindestens teilweise in einem Tiegel (1) zur Aufnahme der Flüssigkeit angeordnet ist und wobei das Kontaktstück (4) außerhalb des Innenraumes des Tiegels (1) angeordnet ist, dadurch gekennzeichnet, daß die Kapillare (2) durch die Wandung des Tiegels (1) geführt und an der Wandung des Tiegels (1) gehaltert ist und daß das Kontaktstück (4) am oder im Boden des Tiegels (1) gehaltert und als Tiegelhalterung ausgebildet ist.

2. Vorrichtung nach Anspruch 1, dadurch gekennzeichnet, daß die Kapillare (2) durch den Boden des Tiegels (1) geführt ist.

3. Vorrichtung nach Anspruch 1 oder 2, dadurch gekennzeichnet, daß der innere Durchmesser der Kapillare (2) an der Düse (7) erweitert ist.

4. Vorrichtung nach Anspruch 1 oder 2, dadurch gekennzeichnet, daß die Düse (7) schlitzförmig ausgebildet ist.

5. Vorrichtung nach einem der Ansprüche 1 bis 4, dadurch gekennzeichnet, daß die Differenz zwischen innerem und äußerem Durchmesser der Kapillare (2) an dem äußeren Ende der Düse (7) nicht größer ist als 1 mm.

6. Vorrichtung nach Anspruch 5, dadurch gekennzeichnet, daß die Differenz nicht größer ist als 0,5 mm.

7. Vorrichtung nach einem der Ansprüche 1 bis 6, dadurch gekennzeichnet, daß das Produkt aus thermischer Leitfähigkeit und Wandstärke der Kapillare an dem äußeren Ende der Düse kleiner ist als 5,5 x 10⁻³ W/K bei 1400° C.

8. Vorrichtung nach Anspruch 3 oder 4, dadurch gekennzeichnet, daß die Düse (7) seitlich an der Kapillare (2) angeordnet ist.

9. Vorrichtung nach einem der Ansprüche 1 bis 8, dadurch gekennzeichnet, daß die Kapillare (2) aus einem gasdichten Material, wie beispielsweise Aluminiumoxid, Quarz oder Zirkonoxid gebildet ist.

10. Meßeinrichtung mit einer Gasleitung (9) und mit einer Vorrichtung zur Messung der Oberflächenspannung von Flüssigkeiten mit einer Kapillare (2) zur Gaszufuhr, die ein Kontaktstück (4) und eine Düse (7) aufweist, wobei die Kapillare (2) mindestens teilweise in einem Tiegel (1) zur Aufnahme der Flüssigkeit angeordnet ist und wobei das Kontaktstück (4) außerhalb des Innenraumes des Tiegels (1) angeordnet ist, wobei die Kapillare (2) durch die Wandung des Tiegels (1) geführt und an der Wandung des Tiegels (1) gehaltert ist, wobei das Kontaktstück (4) am oder im Boden des Tiegels (1) gehaltert und als Tiegelhalterung ausgebildet und mit einem Gasanschlußstutzen (5) der Gasleitung (9) sowie mit einem Drucksensor (12) und/oder einem Durchflußmesser gasdicht verbunden ist.

## Claims

1. Device for the measurement of the surface tension of fluids with a capillary for the gas supply, which has a contact piece and a nozzle, in which the capillary (2) is arranged at least partially in a crucible (1) to receive the fluid and in which the contact piece (4) is arranged outside the interior of the crucible (1), characterised in that the capillary (2) is guided through the wall of the crucible (1) and is mounted on the wall of the crucible (1) and that the contact piece (4) is mounted on or in the base of the crucible (1) and is constructed as a crucible mounting.

2. Device according to Claim 1, characterised in that the capillary (2) is guided through the base of the crucible (1).

3. Device according to Claim 1 or 2, characterised in that the inner diameter of the capillary (2) is widened at the nozzle (7).

4. Device according to Claim 1 or 2, characterised in that the nozzle (7) is constructed in a slit shape.

5. Device according to one of Claims 1 to 4, characterised in that the difference between the inner and outer diameter of the capillary (2) on the outer end of the nozzle (7) is not greater than 1 mm.

6. Device according to Claim 5, characterised in that the difference is not greater than 0.5 mm.

7. Device according to one of Claims 1 to 6, characterised in that the product of thermal conductivity and wall thickness of the capillary at the outer end of the nozzle is smaller than 5.5 x 10⁻³ W/K at 1400 ° C.

8. Device according to Claim 3 or 4, characterised in that the nozzle (7) is arranged laterally on the capillary (2).

9. Device according to one of Claims 1 to 8, characterised in that the capillary (2) is formed from a gas-tight material, such as for example aluminium oxide, quartz or zirconium oxide.

10. Measuring apparatus with a gas pipe (9) and with a device for measuring the surface tension of fluids with a capillary (2) for the gas supply, which has a contact piece (4) and a nozzle (7), in which the capillary (2) is at least partially arranged in a crucible (1) to receive the fluid and in which the contact piece (4) is arranged outside the interior of the crucible (1), in which the capillary (2) is guided through the wall of the crucible (1) and is mounted on the wall of the crucible (1), in which the contact piecce (4) is mounted on or in the base of the crucible (1) and is constructed as a crucible mounting and connected in a gas-tight manner with a gas connection piece (5) of the gas pipe (9) and also with a pressure sensor (12) and/or with a through-flow meter.

## Revendications

1. Dispositif pour mesurer la tension superficielle de liquides, comprenant un capillaire pour l'amenée de gaz, qui présente une pièce de contact et une buse, le capillaire (2) étant disposé au moins en partie dans un creuset (1) destiné à recevoir le liquide et la pièce de contact (4) étant disposée à l'extérieur de l'espace intérieur du creuset (1), caractérisé en ce que le capillaire (2) est passé à travers la paroi du creuset (1) et supporté sur cette paroi, et que la pièce de contact (4) est supportée sur ou dans le fond du creuset (1) et réalisée comme un support de creuset.

2. Dispositif selon la revendication 1, caractérisé en ce que le capillaire (2) est passé à travers le fond du creuset (1).

3. Dispositif selon la revendication 1 ou 2, caractérisé en ce que le diamètre intérieur du capillaire (2) est élargi au droit de la buse (7).

4. Dispositif selon la revendication 1 ou 2, caractérisé en ce que la buse (7) est réalisée en forme de fente.

5. Dispositif selon une des revendications 1 à 4, caractérisé en ce que la différence entre les diamètres intérieur et extérieur du capillaire (2) à l'extrémité extérieure de la buse (7) ne dépasse pas 1 mm.

6. Dispositif selon la revendication 5, caractérisé en ce que la différence ne dépasse pas 0,5 mm.

7. Dispositif selon une des revendications 1 à 6, caractérisé en ce que le produit de la conductibilité thermique et de l'épaisseur de paroi du capillaire à l'extrémité extérieure de la buse est inférieur à 5,5 x 10⁻³ W/K à 1400° C.

8. Dispositif selon la revendication 3 ou 4, caractérisé en ce que la buse (7) est formée latéralement sur le capillaire (2).

9. Dispositif selon une des revendications 1 à 8, caractérisé en ce que le capillaire (2) est fait d'un matériau étanche au gaz, comme par exemple d'alumine, de quartz ou de zircone.

10. Appareil de mesure comportant un conduit de gaz (9) et un dispositif pour mesurer la tension superficielle de liquides, dispositif qui comprend un capillaire (2) pour l'amenée de gaz, qui présente une pièce de contact (4) et une buse (7), le capillaire étant disposé au moins en partie dans un creuset (1) destiné à recevoir le liquide et la pièce de contact (4) étant disposée à l'extérieur de l'espace intérieur du creuset (1), le capillaire (2) étant passé à travers la paroi du creuset (1) et supporté sur cette paroi, la pièce de contact (4) étant supportée sur ou dans le fond du creuset (1), réalisée comme un support de creuset et reliée de façon étanche au gaz à une tubulure de raccordement de gaz (5) du conduit de gaz (9) ainsi qu'à un capteur de pression (12) et/ou un débitmètre.
